(19) Europäisches Patentamt
European Patent Office
Office européen des brevets

(11) **EP 1 244 096 A2**

(12) **EUROPEAN PATENT APPLICATION**

(43) Date of publication:
25.09.2002 Bulletin 2002/39

(51) Int Cl.⁷: **G11B 7/00**, G11B 7/007

(21) Application number: 02252016.7

(22) Date of filing: 20.03.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 21.03.2001 JP 2001079709
06.07.2001 JP 2001206902

(71) Applicant: **Nippon Columbia Co., Ltd.**
**Tokyo 107-8011 (JP)**

(72) Inventor: **Nakano, Kazuhiko**
**Tokyo, 173-0003 (JP)**

(74) Representative: **Hackney, Nigel John et al**
**Mewburn Ellis,**
**York House,**
**23 Kingsway**
**London WC2B 6HP (GB)**

(54) **Optical information record medium, method of recording information on optical information record medium, and information recording apparatus**

(57) In recording on a second or deeper information recording layer of an optical information record medium (28) having a plurality of recording layers, power of a recording laser beam is appropriately controlled even when quantity of transmitting beam is changed depending on recording states of information recording layers positioned on the incidence side of the information recording layer in which information is to be recorded.

The optical information record medium is provided with recording power test areas respectively in the second and deeper information recording layers, separately from user data recording areas. Those recording power test areas are used for testing a recording power of the recording laser beam. Further, before recording on a user data recording area in a second or deeper information recording layer, the recording power test area in the recording layer in question is used to test the recording power, to obtain a reference power and a level of a return beam at that time. Then, in recording on an arbitrary location in the user data area of the recording layer in question, the optimum recording power for the mentioned arbitrary location is calculated using a level of a return beam detected in recording on a location in the neighborhood of the mentioned arbitrary location, the reference power obtained in the test of the recording power, and the level of the return beam obtained at that time. The power of the recording laser beam is controlled such that recording on the mentioned arbitrary location is performed with that optimum recording power.

FIG.1

EP 1 244 096 A2

**Description**

The present invention relates to an optical information record medium provided with a plurality of information recording layers, and a method of recording information to this optical information record medium.

Recently, practical use of a mass storage and high density optical information disk is advancing. As a reproduction-only medium, mainly a compact disk (CD), a laser disk (LD), and the like are widely spread. Further, as a record and reproduction disk, a phase change type disk utilizing reflectance change between amorphous and crystal states, a magneto-optical disk (MO) utilizing thermomagnetic recording and magneto-optic effects, and the like are being established as external storage media for a computer. Further, CD-R, which can record only once and can be played back on a CD drive or a CD-ROM drive, is being established as an experimental disk in an authoring stage or as a master disk.

Further, as a next-generation multimedia medium, is proposed an optical disk that covers audio data usually recorded in a CD, high quality video data usually recorded in an LD, and computer data usually recorded in a CD-ROM, and integrates a reproduction-only disk and a record medium. This type of medium was standardized as DVD (Digital Versatile Disk) by a working group (DVD consortium) in August 1996.

DVD employs some new techniques in order to store a digital video signal and mass data for computer, namely, in order to increase a recording density of a disk more than the conventional ones. A size of a pit in DVD is a little smaller than a half, both in the radial and circumferential directions, in comparison with CD. Further, in order to remove effect of deterioration in reproduction owing to a tilt of a disk, thickness of its substrate is determined to be 0.6 mm. And, to secure mechanical strength, a DVD is structured such that two substrate of 0.6 mm are stuck together. Information may be recorded on one or both of the substrate that have been stuck, and disk structure may be single-side reproduction, double-side reproduction, or single-sided two layers, double-sided two layers. Even in the case of a single-sided single layer disk, its recording density is six times the recording density of a CD. Or, in other words, it can record two hours' moving image having quality equivalent or superior to the laser disk.

Further, phase change disks such as DVD-RAM and DVD-RW are coming into wide use. In these disks, an end user himself can record, reproduce and erase information. For example, mass information such as a digital moving image can be treated using such a phase change disk, and, if necessary, random access is possible to record and reproduce the information. Thus, it is expected that a phase change disk is used for a home vide recorder that will replace VCR (Video Cassette Recorder) of the present mainstream.

In order that such DVD-RAM, DVD-RW etc. substitute videotape, it is desired to make them have a higher density and larger capacity. Capacity of the current DVD is 4.7 GB for one side, and can record about two hours' NTSC moving image. However, when it is considered as a substitute of videotape, recording time of 4 - 6 hours or more is required. Further, in order to record high-definition digital moving image of two or more hours, recording capacity of 15 - 30 GB is required.

As a method of increasing recording capacity of an optical disk, may be mentioned a method in which a plurality of information recording layers are used, in addition to a method in which laser of a shorter wave length is used to increase a recording density, and a method in which an object lens having larger NA (numerical aperture) is used to increase a recording density. With respect to the current DVD, a working group proposes a multi-layer disk such as DVD-9 and DVD-18, in which information can be reproduced from two information recording layers on one side. Such a disk realizes larger recording capacity in comparison with a single layer disk.

In the case of a plurality of information recording layers that can record information, the following problems exist. For example, in the case of a two-layer disk in which record and reproduction can be performed from one side, information can be recorded in a way similar to the conventional single layer disk when the information is recorded on a first information recording layer closer to the laser beam incidence side. When, however, information is recorded on a second information recording layer, laser beam that has been transmitted through the first information recording layer is used to record the information on the second information recording layer, and accordingly, the recording into the second information recording layer is affected by the transmittance of the first information recording layer. The transmittance of the first information recording layer changes depending on its state (erased state/recorded state), and as a result, quantity of beam reaching the second information recording layer changes depending on the sate of the first information recording layer.

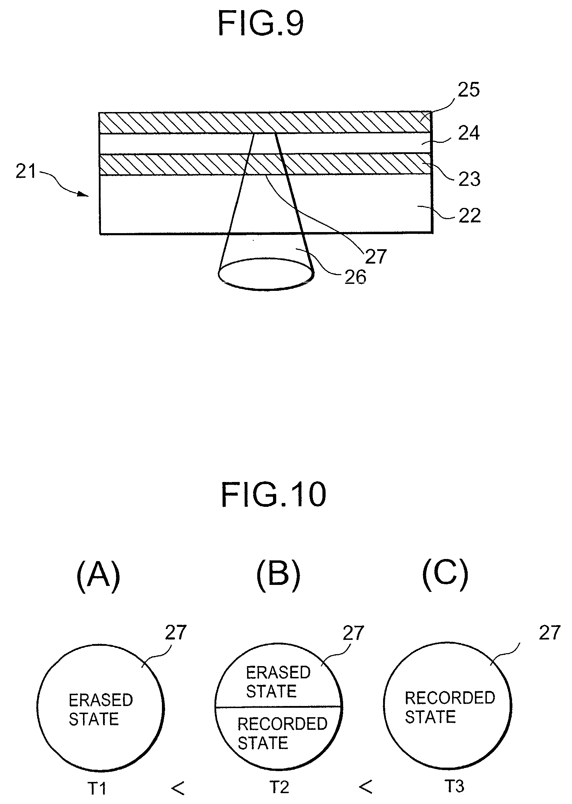

Fig. 9 is a diagram for explaining the case where information is recorded on an optical information record medium having two information recording layers. In the figure, a reference numeral 21 refers to an optical information record medium, 22 to a substrate, 23 to a first information recording layer, 24 to an intermediate layer, 25 to a second information recording layer, 26 to a recording laser beam, and 27 to a spot.

The first information recording layer 23 is formed on one side of the substrate 22 of the optical information record medium 21. The first information recording layer 23 is made of a phase change material (for example, a GeTeSb (germanium-tellurium-antimony family material)), whose crystal state (higher reflectance and lower transmittance) defines an erased state and amorphous state (lower reflectance and higher transmittance) defines a recorded state for example. On the first information recording layer 23, is formed the second information recording layer 25 via the intermediate layer (for example, an ultraviolet curing resin layer) 24. The second information recording layer 25 is made of a phase change material (for example, a GeTeSb family material), which defines an erased state by its crystal state and a recorded state by its amorphous state similarly to the first information recording layer 23, for example. When information is recorded on the first information recording layer 23 and second information recording layer 25 of such an optical information record medium 21, areas of record marks become an amorphous state and areas other than the record marks become a crystal state. In other words, in the first information recording layer 23 and second information recording layer 25, areas where no information is recorded have the lower transmittance since they are in the crystal state, and areas where information is recorded have the higher transmittance than the areas where no information is recorded, since recording marks in the amorphous state are formed there.

Thus, in a phase change disk such as DVD-RAM, usually an erased area is in a crystal state and a recorded area is in an amorphous state, and recording and reproduction are realized by a change in its optical constant, i.e., a change in the reflectance. When the first information recording layer 23 is in the unrecorded state (i.e., the crystal state), its transmittance is low, and quantity of recording laser beam reaching the second information recording layer 25 becomes smaller. On the contrary, when the first information recording layer 23 is in the recorded state (i.e., the amorphous state), its transmittance is high, and quantity of recording laser beam reaching the second information recording layer 25 becomes larger. When recording power is adjusted to either state, deviation from the desired recording power is caused depending on the recorded or unrecorded state of the first information recording layer 23. Fluctuation in the recording power causes deterioration of recording characteristics such as jitter and error rate properties of the second information recording layer 25.

Here, referring to Fig. 9, recording power in the second information recording layer 25 will be described. When information is to be recorded on the second information recording layer 25 of an optical information record medium 21, a recording laser beam 26, whose recording power is modulated according to the information to be recorded, is irradiated onto the second information recording layer 25 via a substrate 22. The recording laser beam 26 is controlled to focus on the second information recording layer 25. At that time, the recording laser beam 26 is transmitted through the first information recording layer 23 to reach the second information recording layer 25. Accordingly, the quantity of the recording laser beam 26 reaching the second information recording layer 25 changes depending on the state of the first information recording layer 23 at a part (a spot 27) on which the recording laser beam 26 is irradiated.

Fig. 10 is a diagram for explaining states of the area (spot 27) in the first information recording layer 23, on which the recording laser beam 26 is irradiated, when the recording laser beam 26 is used to record information on the second information recording layer 25. There are three cases with respect to the state of this spotted area 27, i.e., a case (A) where all the area is in the erased state, a case (B) where a part of the area is in the erased state and the other part is in the recorded state, and a case (C) where all the area is in the recorded state. Here, however, in the case (B) where a part of the area is in the erased state and the other part is in the recorded state, the ratio between the erased area and the recorded area is not constant, and changes depending on the recorded state.

Assuming that T1 is the transmittance in the case (A), T2 (T2 varies according to the ratio between the erased area and the recorded area) in the case (B), and T3 in the case (C), then, T1 < T2 < T3.

A multi-layer optical disk described in Japanese Unexamined Patent Laid-Open No. 11-195243 copes with this problem by limiting a film thickness of each layer or optical absorption coefficient to lessen decay of the recording laser beam due to the first information recording layer. However, it is impossible to have the same transmittance between a recorded area and an erased area of the first information recording layer. Thus, it is inevitable that recording of information on the second information recording layer is affected by a state of the first information recording layer.

This will be described taking an example. It is assumed that the transmittance $T_E$ of the first information recording layer 23 of the optical information record medium 21 shown in Fig. 9 is 10 % when all the area irradiated by the recording laser beam 26 is in the erased state (i.e., the crystal state), and that the transmittance $T_R$ is 40 % when all the area irradiated by the recording laser beam 26 is in the recorded state (i.e., the amorphous state at a record mark area). Here, it is assumed that the optimum recording power $P_0$ for the second information recording layer 25 is 1 mW when the first information recording layer 23 is in the erased state (the state in which the transmittance is lowest). Then, it is required that the recording power of the recording laser beam 26 is 10 mW (10 mW $\times$ 0.1 = 1 mW, since the transmittance of the first information recording layer 23 is 10 %). On the other hand, when the power of the recording laser beam 26 is 10 mW and all the area irradiated by the recording laser beam 26 in the first information recording layer 23 is in the recorded state (the state in which the transmission is highest), then, the recording power reaching the second information recording layer 23 becomes 4 mW (10 mW $\times$ 0.4 = 4 mW), which is over power.

Here, the recording power of the recording laser beam 26 can be controlled if it is possible to know previously the transmittance $T_R$ for the case where the first information recording layer 23 is in the recorded state. However, as described referring to Fig. 10, the transmittance of an area within a spot 27 of the recording laser beam 26 changes depending on the ratio of the recorded area to the erased area. Thus, the transmittance $T_R$ of the first information recording layer 23 can not be known in advance.

The present invention has been made taking the above situation into consideration. An object of the present invention is to control suitably the power of the recording laser beam when information is recorded on a second or deeper information recording layer in an optical information record medium having two or more information recording layers, even if quantity of transmitted beam is changed depending on a recording state of a recording layer positioned on the incidence side of the information recording layer on which the information is to be recorded.

The present invention, in one of its aspects, provides an optical information record medium having two or more information recording layers, wherein: said optical information record medium has recording power test areas respectively in second and deeper information recording layers from a recording laser beam incidence side, said recording power test areas being different from user data recording areas and used for testing a recording power. Here, it is preferable that the recording power test areas are located not to overlap each other seen from the laser beam incidence side.

Further, in an information recording method according to another aspect of the present invention, information is recorded on the optical information record medium having the above-described configuration, using a recording laser beam. Before recording on a user data recording area in a second or deeper information recording layer, the recording power test area in the recording layer in question may be used to test the recording power, to obtain a reference power and a level of a return beam at that time. Then, in recording on an arbitrary location in the user data recording area of the information recording layer in question, the optimum recording power for the mentioned arbitrary location may be calculated using a record power used for recording on a location in the neighborhood of said arbitrary location, a level of a return beam detected at that time, the reference power obtained in the test of the recording power, and the level of the return beam obtained at that time. The power of the recording laser beam may be controlled such that recording on the mentioned arbitrary location is performed with that optimum recording power.

Further, an information recording apparatus according to another aspect of the present invention records information on the optical information record medium having the above-described configuration, using a recording laser beam, and comprises: a laser source; an irradiation means that irradiates a recording laser beam coming out of said laser source onto the optical information record medium; a photo detection means for detecting a return beam of said recording laser beam; and a control unit;

The control unit preferably tests the recording power using a recording power test area in a second or deeper information recording layer before recording on a user data recording area of said information recording layer, to obtain a reference power and a level of a return beam at that time. Further, the control unit preferably calculates an optimum recording power for an arbitrary location in the user data recording area of said information recording layer before recording on said arbitrary location, with said optimum recording power preferably being calculated using a recording power used for recording on a location in neighborhood of said arbitrary location, a level of a return beam detected at that time, the reference power obtained in said step of testing the recording power, and the level of the return beam obtained at that time; and controls the recording power such that recording on said arbitrary location is performed with said optimum recording power.

BRIEF DESCRIPTION OF THE DRAWINGS

Fig. 1 is a block diagram showing a basic configuration of an information recording apparatus used in an embodiment of the present invention;
Fig. 2 is a schematic diagram showing levels of a return beam of a laser beam when information is recorded on a first information recording layer;
Fig. 3 is a schematic diagram showing levels of a return beam of a laser beam when information is recorded on a second information recording layer;
Fig. 4 is a view showing appearance for an optical information record medium used in an embodiment of the present invention;
Fig. 5 is a schematic view showing recording power test areas of an optical information record medium having three information recording layers;
Fig. 6 is a schematic view showing recording power test areas of an optical information record medium having three information recording layers;
Fig. 7 is a cross section showing recording power test areas of the optical information record medium shown in Fig. 6;
Fig. 8 is a flowchart of a recording power test;
Fig. 9 is a view for explaining a case where information is recorded on an optical information record medium having two information recording layers; and
Fig. 10 is a diagram for explaining recording states of an area where spot is irradiated.

DETAILED DESCRIPTION OF THE PREFERRED EMBODIMENTS

Embodiments of the present invention will be described referring to drawings.

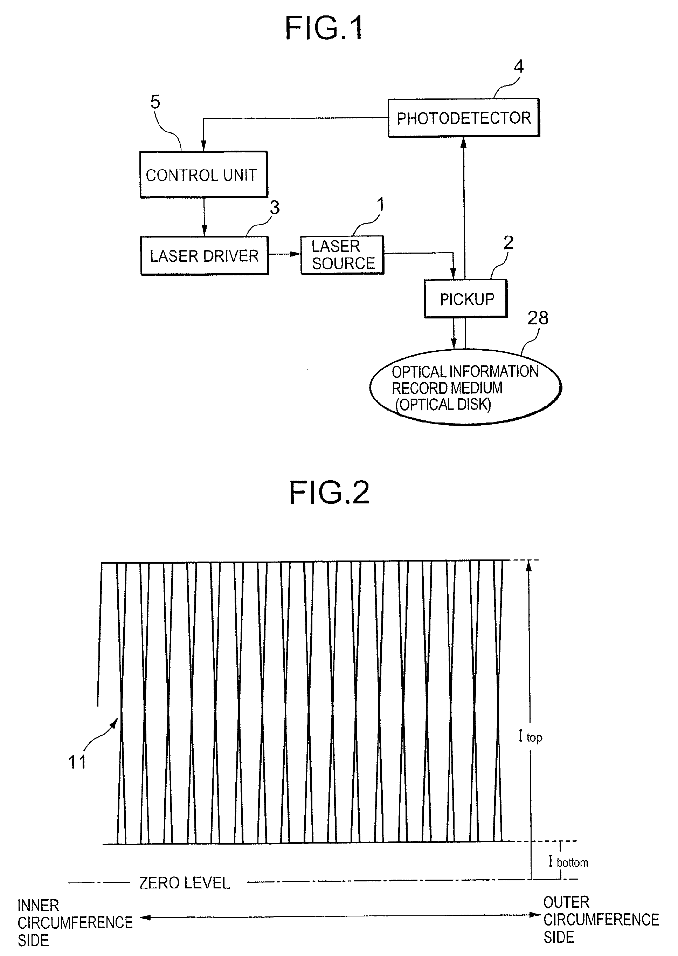

Fig. 1 is a block diagram showing a basic configuration of an information recording apparatus to which an embodiment of the present invention is applied. In the figure, the reference numeral 1 refers to a laser source, 2 to a pickup, 3 to a laser driver; 4 to a photodetector, 5 to a control unit, and 28 to an optical information record medium having a plurality of information recording layers.

As the laser source 1, is used a semiconductor laser, a gas laser, or the like. As the wavelength of the laser, a CD uses a wavelength of 780 - 830 nm, and a DVD uses a wavelength of 630 - 650 nm. In order to increase a recording density of the optical information record medium 28, a spot diameter of a laser beam used for recording and reproduction should be smaller. A spot diameter is proportional to the wavelength ($\lambda$) of the laser and inversely proportional to the numerical aperture (NA) of the object lens. Here, as an optical disk makes progress toward a higher density, the laser source 1 is required to have a shorter wavelength. And, in the case of a next-generation post-DVD high density optical disk, employment of bluish purple semiconductor laser of 400 nm is considered.

The pickup 2 is an optical system for focusing a laser beam from the laser source 1 on a recording film surface of the optical information record medium 28. Usually, the pickup 2 is integrated with the laser source 1. As mentioned above, the recording density of an optical disk is proportional to the numerical aperture (NA) of the object lens. Thus, as an optical disk becomes of a higher density, the numerical aperture becomes larger. NA is about 0.45 for a CD and about 0.6 for a DVD, while it is considered that NA is about 0.65 - 0.85 for a next-generation high density optical disk. Of course, any appropriate optical system may be used as a laser irradiation means.

The laser driver 3 is a circuit for driving the laser source 1. Usually, the laser driver 3 is integrated with the laser source 1 and the pickup 2.

The photodetector 4 transforms a return beam of a recording laser beam from the optical information record medium 28, into an electric signal. Based on this return beam, the photodetector 4 detects a reproduction signal recorded on the optical information record medium 28, a servo signal for positioning the focal position of a laser beam irradiated through the pickup 2 onto the information recording surface, and a servo signal for tracing recorded marks. Here, a servo circuit, etc. are not shown.

The control unit 5 performs calculation based on the detection output of the photodetector 4, and, based on the calculation result, generates a control signal for power control of the laser driver 3, controls various component units, and performs other operations. Ordinarily, the control unit 5 comprises a CPU and a memory.

When, in the information recording apparatus having the above-described configuration, information is to be recorded on the first information recording layer of the optical information record medium 28 from the side of the recording laser beam incidence, the control unit 5 controls the laser driver 3 such that the power of the recording laser beam from the laser source 1 becomes predetermined recording power, and controls a drive system of the pickup 2 such that the focal position is adjusted on the first information recording layer.

On the other hand, when information is to be recorded on the second or deeper information recording layer of the optical information record medium 28 from the side of the recording laser beam incidence, the control unit 5 controls the laser driver 3 such that the recording power of the recording laser beam becomes predetermined recording power, based on the optimum (reference) power of the recording laser beam and the return beam of the recording laser beam from the optical information record medium 28. The optimum (reference) power of the recording laser beam has been determined in advance by the below-mentioned recording power test concerning the information recording layer as a target of the recording, and the return beam is detected by the photodetector 4.

Here, no problem will occur if the calculation based on the detection result of the photodetector 4 is finished instantaneously, as well as the power control of the laser driver 3 based on the calculation result. As a matter of fact, however, the laser control is delayed by a time required for such feedback. Thus, at the time of recording on the second or deeper information recording layer of the optical information record medium 28 from the side of the recording laser beam incidence, the control unit 5 stores a power value of a return beam detected by the photodetector 4 at a location where information is recorded, for at least one circumference (one track) of the optical information record medium 28, into a buffer such as a memory. Then, when information is to be recorded at an arbitrary location of the optical information record medium 28, a power value of the return beam in recording at a neighbor location to the above-mentioned arbitrary location where the information is to be recorded is read from the buffer. Then, the laser beam used for recording at the above-mentioned arbitrary location is controlled in its power, based on the power value of the return beam and the optimum power that has been determined in advance concerning the information recording layer as the target of the recording.

Here, the above-mentioned arbitrary location is a location at which the information is to be recorded on the second or deeper information recording layer of the optical information record medium 28. Further, the above-mentioned neighbor location is a location where information was recorded a predetermined time before in relation to the above-mentioned arbitrary location (the location at which the information is to be recorded).

With respect to an arbitrary location on an arbitrary track of an information recording layer of the optical information record medium 28, the above-mentioned neighbor location is a location at which information was recorded the predetermined time before on the same track. Or, with respect to a track including the location (the above-mentioned arbitrary location) at which the information is to be recorded in the information recording layer of the optical information record medium 28, the above-mentioned neighbor location is a location at which information was recorded in a track other than the above-mentioned track. The present embodiment will be described assuming that the arbitrary location lies in an arbitrary track in the second or deeper information recording layer of the optical information record medium 28, and the neighbor location lies in a track (a neighbor track) in the neighborhood of the mentioned arbitrary track.

In the case where data such as video data or audio data are recorded consecutively from an inner track, the control unit 5 controls the power of the recording laser beam for a track in which information is to be recorded, based on a power value of a return beam from the track that lies inwardly next to the above-mentioned track, and the optimum power of the recording laser beam, which has been determined in advance concerning the information recording layer as the target of the recording.

In that case, the power of the recording laser beam is controlled based not on the power value of the return beam from the track in which the information is to be recorded, but on the power value of the return beam from the track that lies inwardly next to that track. Here, when, for example, NA of the object lens is 0.6 and the layer pitch is 50 μm, then, the spot size of the recording laser beam is 60 μm in an information recording layer positioned on the near side (the recording laser beam incidence side) of the information recording layer (which is the second or deeper information recording layer from the side of the recording laser beam incidence) on which the information is to be recorded. Accordingly, when the track pitch of the optical information record medium 28 is 0.74 μm, 80 or more tracks lies in this spot. Thus, it is considered that, even if there exists discrepancy of one track, the power value of the return beam is not largely affected (or, does not differ largely).

Thus, the power value used for controlling the power of the recording laser beam should not necessarily be the power value of the return beam of recording in the neighbor track to the track in which the information is to be recorded. A power value of a return beam of a track several tracks distant from the track in which the information is to be recorded may be used, as far as it is in a predetermined range (for example, a range of errors within several percent) not largely different from the power value of the return beam obtained for the track in which the information is to be recorded by irradiation of the recording laser beam. Here, the difference from the power value of the return beam obtained for the track in which the information is to be recorded by irradiation of the recording laser beam is determined by positional deviation of the portion where the recording laser beam passes in each information recording layer on the laser beam incidence side of the information recording layer as the target of the recording.

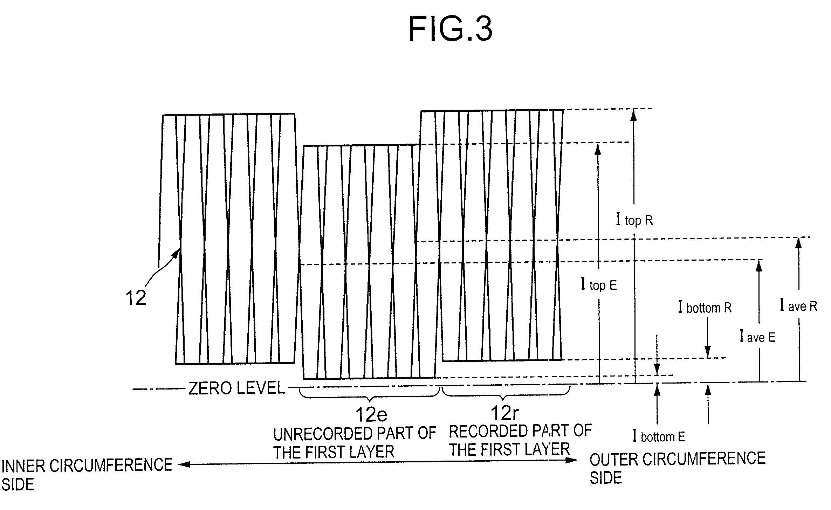

Next, operation of controlling the recording power by detection of the return beam will be described in detail, referring to Figs. 2 and 3. In the following, description is given taking an example where the optical information record medium 28 has two information recording layers. Of course, it can be applied similarly to the case where the optical information record medium 28 has three or more information recording layers.

As described above referring to Fig. 10, a return beam from the second or deeper information recording layer from the side of the recording laser beam incidence is changed in its level (its power value), as an information recording layer positioned on the near side (the laser beam incidence side) of the information recording layer in question changes its transmittance depending on its recording state.

Fig. 2 is a schematic diagram showing levels of a return beam 11 of the recording laser beam when information is recorded on the first information recording layer from the side of the recording laser beam incidence in the optical information record medium 28. It is seen that a return beam of the recording laser beam is obtained without level fluctuation, and the maximum level $I_{top}$ and the minimum level $I_{bottom}$ of the return beam can be considered as constant. The maximum level $I_{top}$ and the minimum level $I_{bottom}$ are slightly affected by the length of a record mark and an interval between record marks under recording. However, this influence is limited to an ignorable extent.

Fig. 3 is a schematic diagram showing levels of a return beam 11 of the recording laser beam when information is recorded on the second information recording layer from the side of the recording laser beam incidence in the optical information record medium 28. The recording laser beam is transmitted through the first information recording layer and reflected by the second information recording layer. This reflected beam is transmitted again through the first information recording layer, and becomes a return beam 12. Thus, the return beam 12 is affected by the recording state of the first information recording layer.

Namely, when a part through which the recording laser beam passes in the first information recording layer is in an entirely unrecorded state, the transmittance of the first information recording layer is lower, and accordingly, quantity of recording laser beam reaching the second information recording layer becomes smaller. As a result, as shown by the part 12e of Fig. 3 for example, the level of the return beam becomes lower both at the maximum level $I_{topE}$ and at the minimum level $I_{bottomE}$. On the other hand, when a part through which the recording laser beam passes in the first information recording layer is in an entirely recorded state, the transmittance of the first information recording layer is higher, and accordingly, quantity of recording laser beam reaching the second information recording layer becomes larger. As a result, as shown by the part 12r of Fig. 3, the level of the return beam becomes higher both at the maximum level $I_{topR}$ and at the minimum level $I_{bottomR}$.

Here, in the part through which the recording laser beam passes in the first information recording layer, the recording laser beam is defocused, and accordingly, the transmittance reflects recording states of a plurality of tracks in the first information recording layer. Thus, transmittance in the first information recording layer changes continuously in the radial direction of the second information recording layer (in other words, in the case (B) shown in Fig. 10, the ratio between the recorded part and the unrecorded part changes continuously). The transmittance of the first information recording layer is proportional to the power of the recording laser beam reaching the second information recording layer, and as a result, the transmittance of the first information recording layer is reflected in the return beam detected by the photodetector 4. Thus, as a matter of fact, in Fig. 3, the level of the return beam changes continuously between the unrecorded part 12e and the recorded part 12r of the first information recording layer.

Here, it is assumed, for example, that the initial (reference) power of the recording laser beam is the power $P_0$ that is optimum for recording on the second information recording layer when a part through which the recording laser beam passes in the first information recording layer is in an entirely unrecorded state. When a symbol $T_R$ refers to the transmittance of a part through which the recording laser beam is transmitted in the first information recording layer when that part is in an entirely recorded sate, $T_E$ to the transmittance of the part through which the recording laser beam is transmitted when that part is in an entirely unrecorded state, and $I_{topR}$ and $I_{topE}$ to the maximum levels of the return beam in the states of the transmittances $T_R$ and $T_E$, respectively, then, the following expression is obtained, since the recording laser beam passes the first information recording layer twice to become the return beam.

$$I_{topR}{}^{0.5} : I_{topE}{}^{0.5} = T_R : T_E$$

Thus, the following expression shows the rising in the power of the recording laser beam from the case where the recording laser beam transmitting part in the first information recording layer is in the entirely unrecorded state to the case where that part is in the entirely recorded state.

$$(T_R/T_E) = (I_{topR}/I_{topE})^{0.5}$$

And, the following expression determines the optimum power $P_{opt}$ of the recording laser beam when the recording laser beam transmitting part in the first information recording layer is in the entirely recorded state.

$$P_{opt} = P_0 \times (T_E/T_R) = P_0 \times (I_{topE}/I_{topR})^{0.5}$$

Accordingly, in the present embodiment, the below-mentioned recording power test is performed to obtain the optimum power $P_0$ for recording information on the second information recording layer when the recording laser beam transmitting part in the first information recording layer is in the entirely unrecorded state, and to obtain the level $I_{topE}$ of the return beam in that case. These obtained values $P_0$ and $I_{topE}$ are stored into the buffer such as a memory.

When information is to be recorded in a certain track A in the second information recording layer, these stored values $P_0$ and $I_{topE}$ are used together with a recording power $P_B$ used at the time when information was recorded on a track B in the neighborhood of the track A and the maximum level $I_{topB}$ of the return beam detected at that time by the photodetector 4, for controlling the optimum power $P_{opt}$ of the recording laser beam for the track A to satisfy the following expression.

$$P_{opt} = P_0 \times (I_{topE}/I'_{topB})^{0.5}$$

where $I'_{topB}$ is the maximum level of the return beam when it is assumed that the recording power $P_B$ is same as the recording power $P_0$, and can be obtained from the following expression derived from the above expression.

$$I'_{topB} = I_{topB} \times (P_B/P_0)^2$$

By this, the optimum recording can be realized without causing over power to the track A of the second information recording layer. In other words, the optimum recording for recording information on the second information recording area can be realized without depending on the recording state of the first information recording layer.

When information has not been recorded in the track B in the neighborhood of the track A, i.e., when the maximum level $I_{topB}$ of the return beam has not been obtained yet, then, the initial (reference) power $P_0$ of the recording laser beam is used.

Referring to Fig. 9, an example will be described. When information is to be recorded on the second information recording layer 25 of an optical information record medium 21, the return beam of the recording laser beam 26 is transmitted twice through the first information recording layer 23. First, when a recording laser beam transmitting part in the first information recording layer 23 is in an entirely unrecorded state, then, the transmittance $T_E$ of the part in question is unfluctuating value and can be known in advance. For example, it is assumed that $T_E$ is 10 %. Then, when it is assumed that the optimum power $P_0$ (recording power of the laser source 1) for recording information on the second information recording layer 25 is 10mW in the case where the recording laser beam transmitting part of the first information recording layer 23 is in the entirely unrecorded state, then, the power $P_E$ of the recording laser beam reaching the second information recording layer 25 is 1mW in that case.

Further, when information is to be recorded on a certain track A of the second information recording layer 25, the transmittance $T_A$ of the recording laser beam reaching this track A through the transmitting part of the first information recording layer 23, is a fluctuating value that depends on the ratio between the recorded area and the unrecorded area of the part in question. For example, it is assumed that $T_A$ is 40 %. In that case, when the recording power $P_0$ (10mW) of the recording laser beam is not controlled, then, the recording power reaching the track A of the second information recording layer 25 is 4mW. In other words, it is four times as large as the power $P_E$ of the recording laser beam that reaches the second information recording layer 25 in the case where the recording laser beam transmitting part of the first information recording layer 23 is in the entirely unrecorded state. Namely, the ratio of both powers is 1 : 4.

Now, the following expression calculates the maximum level $I_{topE}$ of the return beam by the recording laser beam of the power value $P_0$ in the case where the recording laser beam transmitting part of the first information recording layer 23 is in the entirely unrecorded state, assuming that the reflectance of the second information recording layer in an erased state is 50 %. Namely, since the level $I_{topE}$ is the level of the return beam obtained when the recording laser beam is transmitted through the first information recording layer 23, reflected by the second information recording layer 25, and is transmitted again through the first information recording layer 23, the following expression is obtained.

$$I_{topE} = P_0 \times 0.1 \times 0.5 \times 0.1 = 10 \times 0.005 = 0.05 \text{ mW}$$

Further, the following expression calculates the maximum level $I_{topA}$ of the return beam by the recording laser beam of the power value $P_0$, which is detected by the photodetector 4 when the recording is performed on a certain track A of the second information recording layer 25, assuming that the reflectance of the second information recording layer in an erased state is 50 %. Namely, since the level $I_{topA}$ is the level of the return beam obtained when the recording laser beam is transmitted through the first information recording layer 23, reflected by the second information recording layer 25, and is transmitted again through the first information recording layer 23, the following expression is obtained.

$$I_{topA} = P_0 \times 0.4 \times 0.5 \times 0.4 = 10 \times 0.08 = 0.8 \text{ mW}$$

Thus, it becomes 16 times as large as the maximum level $I_{topE}$ of the return beam by the recording laser beam of the power value $P_0$, which is obtained when the recording laser beam transmitting part of the first information recording layer 23 is in the entirely unrecorded state. Namely, the ratio of both return beam levels is 1 : 16.

Accordingly, by raising each term of the ratio between the return beam levels to 0.5th power, the ratio becomes equal to the ratio between the recording powers (1 : 4). Thus, when the power of the recording laser beam is controlled such that information is recorded in the track A of the second information recording layer 25 at a recording power obtained by multiplying the optimum power $P_0$ by $(I_{topE}/I'_{topB})^{0.5}$, then, information can be recorded with the optimum recording power on the second information recording layer 25 always (i.e., without depending on the recording state of the first information recording layer 23). Here, the power $P_0$ is the optimum power of the recording laser beam in recording information on the second information recording layer 25 in the case where the recording laser beam transmitting part of the first information recording layer 23 is in the entirely unrecorded state.

Further, as described above, $I'_{topB}$ is the maximum level of the return beam obtained when information is recorded in a track B in the neighborhood of the track A, assuming that the recording power $P_B$ in recording the information in the track B is same as the recording power $P_0$.

Hereinabove, has been described the case where the recording power on the second information recording layer is controlled by detecting the upper side (i.e., the value of the maximum level) of the waveform of the return beam 12 shown in Fig. 3. However, it is possible to control the recording power by detecting the value of the minimum level of the return beam 12. Similarly to the case where the value of the maximum level of the return beam 12 is used, when the symbol $T_R$ refers to the transmittance of a part through which the recording laser beam is transmitted in the first information recording layer when that part is in an entirely recorded state, $T_E$ to the transmittance of that recording laser beam transmitting part when that part is in an entirely unrecorded state, and $I_{bottomR}$ and $I_{bottomE}$ to the minimum levels of the return beam in the states of the transmittances $T_R$ and $T_E$ respectively, then, the following expression is obtained, since the recording laser beam passes the first information recording layer twice to become the return beam.

$$I_{bottomA}^{0.5} : I_{bottomE}^{0.5} = T_R : T_E$$

Thus, the following expression shows the rising in the power of the recording laser beam from the case where the recording laser beam transmitting part of the first information recording layer is in the entirely unrecorded state to the case where that part is in the entirely recorded state.

$$(T_R/T_E) = (I_{bottomR}/I_{bottomE})^{0.5}$$

Here, similarly to the case where the value of the maximum level of the return beam 12 is used, $P_0$ is the optimum power for recording on the second information recording layer when the recording laser beam transmitting part of the first information recording layer is in the entirely unrecorded state. Then, the following expression gives the optimum power $P_{opt}$ for the recording laser beam when the recording laser beam transmitting part of the first information recording layer is in the entirely recorded state.

$$P_{opt} = P_0 \times (T_E/T_R) = P_0 \times (I_{bottomE}/I_{bottomR})^{0.5}$$

Accordingly, in the present embodiment, the below-mentioned recording power test is performed to obtain the optimum power $P_0$ for recording information on the second information recording layer when the recording laser beam transmitting part in the first information recording layer is in the entirely unrecorded state, and to obtain the minimum level $I_{bottomE}$ of the return beam in that case. These obtained values $P_0$ and $I_{bottomE}$ are stored into the buffer such as a memory.

When information is to be recorded in a certain track A in the second information recording layer, these stored values $P_0$ and $I_{bottomE}$ are used together with a recording power $P_B$ used at the time when information was recorded on a track B in the neighborhood of the track A and the minimum level $I_{bottomB}$ of the return beam detected at that time by the photodetector 4, for controlling the optimum power $P_{opt}$ of the recording laser beam for the track A to satisfy the following expression.

$$P_{opt} = P_0 \times (I_{bottomE}/I'_{bottomB})^{0.5}$$

where $I'_{bottomB}$ is the minimum level of the return beam when it is assumed that the recording power $P_B$ is same as the recording power $P_0$, and can be obtained from the following expression derived from the above expression.

$$I'_{bottomB} = I_{bottomB} \times (P_B/P_0)^2$$

By this, the optimum recording can be realized without causing over power to the track A of the second information recording layer. In other words, the optimum recording for recording information on the second information recording layer can be realized without depending on the recording state of the first information recording layer.

Further, it is possible to control the recording power for the second information recording layer, by detecting the value of the average level of the waveform of the return beam 12 shown in Fig. 3. Similarly to the case where the value of the maximum level of the return beam 12 is used, when the symbol $T_R$ refers to the transmittance of a part through which the recording laser beam is transmitted in the first information recording layer when that part is in an entirely recorded state, $T_E$ to the transmittance of that recording laser beam transmitting part when that part is in an entirely unrecorded state, and $I_{aveR}$ and $I_{aveE}$ to the average levels of the return beam in the states of the transmittance $T_R$ and $T_E$ respectively, then, the following expression is obtained, since the return beam 12 has passed the first information recording layer twice.

$$I_{aveR}^{0.5} : I_{aveE}^{0.5} = T_R : T_E$$

Thus, the following expression shows the rising in the power of the recording laser beam from the case where the recording laser beam transmitting part of the first information recording layer is in the entirely unrecorded state to the case that part is in the entirely recorded state.

$$(T_R/T_E) = (I_{aveR}/I_{aveE})^{0.5}$$

Here, similarly to the case where the value of the maximum level of the return beam 12 is used, $P_0$ is the optimum power for recording on the second information recording layer when the recording laser beam transmitting part of the first information recording layer is in the entirely unrecorded state. Then, the following expression gives the optimum power $P_{opt}$ for the recording laser beam when the recording laser beam transmitting part of the first information recording layer is in the entirely recorded state.

$$P_{opt} = P_0 \times (T_E/T_R) = P_0 \times (I_{aveE}/I_{aveR})^{0.5}$$

Accordingly, in the present embodiment, the below-mentioned recording power test is performed to obtain the optimum power $P_0$ for recording information on the second information recording layer when the recording laser beam transmitting part in the first information recording layer is in the entirely unrecorded state, and to obtain the average level $I_{aveE}$ of the return beam in that case. These obtained values $P_0$ and $I_{aveE}$ are stored into the buffer such as a memory.

When information is to be recorded in a certain track A in the second information recording layer, these store values $P_0$ and $I_{aveE}$ are used together with a recording power $P_B$ used at the time when information was recorded on a track B in the neighborhood of the track A and the average level $I_{aveB}$ of the return beam detected at that time by the photodetector 4, for controlling the optimum power $P_{opt}$ of the recording laser beam for the track A to satisfy the following expression.

$$P_{opt} = P_0 \times (I_{aveE}/I'_{aveB})^{0.5}$$

where $I'_{aveB}$ is the average level of the return beam when it is assumed that the recording power $P_B$ is same as the recording power $P_0$, and can be obtained from the following expression derived from the above expression.

$$I'_{aveB} = I_{aveB} \times (P_B/P_0)^2$$

The average level of the return beam 12 may be obtained by averaging the level of the return beam 12 detected by the photodetector 4, via a low-pass filter, for example. This low-pass filter may be included in the control unit 5.

Hereinabove, the description has been given taking an example where the optical information record medium 28 has two information recording layers. However, the present invention can be applied similarly to a case where the optical information record medium 28 has three or more information recording layers.

Now, is considered a case where information is recorded on the n-th information recording layer counting from the recording laser beam incidence side in an optical information record medium 28 having m information recording layers ($2 \le n \le m$). Here, a symbol $T_{R(n-1)}$ refers to the transmittance of a recording laser beam transmitting part in the first through (n - 1)-th information recording layers when that part is in an entirely recorded state, $T_{E(n-1)}$ to the transmittance of that part when that part is in an entirely unrecorded state, and $I_{topR}$ and $I_{topE}$ to the top levels of the return beam in the states of the transmittances $T_{R(n\cdot1)}$ and $T_{E(n\cdot1)}$ respectively.

Then, in this case, the following expression shows the rising in the recording power of the laser beam from the case where the recording laser beam transmitting part in the first through (n-1)-th information recording layers is in the entirely unrecorded state to the case where that part is in the entirely recorded state.

$$(T_{R(n-1)}/T_{E(n-1)}) = (I_{topR}/I_{topE})^{0.5}$$

And, the following expression determines the optimum power $P_{opt}$ of the recording laser beam when the recording laser beam transmitting part in the first through (n - 1)-th information recording layers is in the entirely recorded state.

$$P_{opt} = P_0 \times (T_{E(n-1)}/T_{R(n-1)}) = P_0 \times (I_{topE}/I_{topR})^{0.5}$$

Accordingly, the below-mentioned recording power test is performed to obtain the optimum power $P_0$ for recording information on the n-th information recording layer when the recording laser beam transmitting part in the first through (n - 1)-th information recording layers is in the entirely unrecorded state, and to obtain the level $I_{topE}$ of the return beam in that case. These obtained values are stored into the buffer such as a memory.

When information is to be recorded in a certain track A in the n-th information recording layer, these stored values $P_0$ and $I_{topE}$ are used together with a recording power $P_B$ used at the time when information was recorded on a track B in the neighborhood of the track A and the maximum level $I_{topB}$ of the return beam detected at that time by the photodetector 4, for controlling the optimum power $P_{opt}$ of the recording laser beam for the track A to satisfy the following expression.

$$P_{opt} = P_0 \times (I_{topE}/I'_{topB})^{0.5}$$

where $I'_{topB}$ is the maximum level of the return beam when it is assumed that the recording power $P_B$ is same as the recording power $P_0$, and can be obtained from the following expression derived from the above expression.

$$I'_{topB} = I_{topB} \times (P_B/P_0)^2$$

By this, the optimum recording can be realized without causing over power to the track A of the n-th information recording layer. In other words, the optimum recording for recording information on the n-th information recording layer can be realized without depending on the recording states of the first through (n - 1)-th information recording layers.

As described above, the optimum power $P_0$ is the optimum power of the recording laser beam in recording information on the n-th information recording layer in the case where the recording laser beam transmitting part of the first through (n - 1)-th information recording layers is in the entirely unrecorded state. Further, the level $I_{topE}$ (or, $I_{bottomE}$ or $I_{avecE}$) is the maximum (minimum or average) level of the return beam obtained when the recording laser beam transmitting part in the first through (n - 1)-th information recording layer is entirely in the unrecorded state. In the present embodiments, these levels are detected in advance by test writing or the like, and stored into the memory or the like provided to the control unit 5. Accordingly, the optical information record medium used in the present embodiments is provided with a test writing area (power test area) in each second or deeper information recording layer.

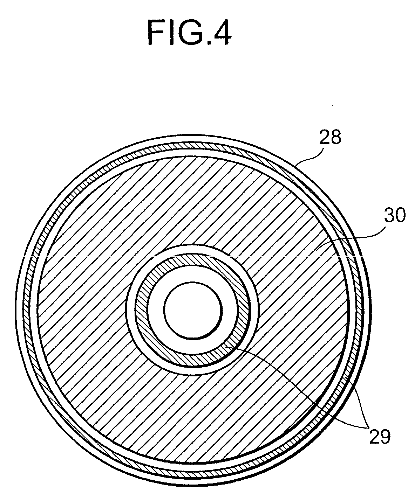

Fig. 4 is a view showing appearance of an optical information record medium 28 used in an embodiment of the present invention. This optical information record medium 28 is provided with a power test area 29 inside the innermost part of a user data recording area 30 and/or outside the outermost part of the user data recording area 30. In the example shown, the power test area 29 is provided both inside and outside the user data recording area 30. According to a disk format, the user data recording area 30 and the power test area 29 may be mixed.

In the present embodiment, recording power is tested not in the user data recording area 30 but in the power test area 29, before user data are recorded on the second or deeper information recording layer of the optical information record medium 28 having such structure, to determine the optimum power $P_0$ and to detect the maximum level $I_{topE}$ (or the minimum level $I_{bottomE}$ or the average level $I_{aveE}$) of the return beam. The obtained optimum power $P_0$ and the maximum level $I_{topE}$ (or the minimum level $I_{bottomE}$ or the average level $I_{aveE}$) of the return beam are stored into the memory or the like provided to the control unit 5. When user data is to be recorded on the second or deeper information recording layer, these data are used together with a recording power $P_B$ that was used at the time of recording on a track B just inside or outside the track in which the user data in question are to be recorded, and the maximum level $I_{topB}$ (or the minimum level $I_{bottomB}$ or the average level $I_{aveB}$) of the return beam detected at that time by the photodetector 4 in the case where the first layer is in an recorded state, in order to calculate the optimum power $P_{opt}$ of the recording laser beam according to the above-described operational expressions. Then, based on the calculation result, the power of the recording laser beam is controlled.

As described above, the optimum power $P_0$ is the power of the recording laser beam that is optimum for recording information on the n-th information recording layer, when the recording laser beam transmitting part in the first through (n - 1)-th information recording layers is in an entirely unrecorded state. Thus, the part (transmitting part) in the first through (n - 1)-th layers, through which the laser beam is transmitted to reach the measuring part of the n-th layer, should be in the recording state of the lowest transmittance, i.e., the unrecorded state in the information recording layer concerned. Accordingly, dedicated power test areas provided respectively in the second and deeper information recording layers should be located in respective positions that do not overlap each other seen from the laser beam incidence side.

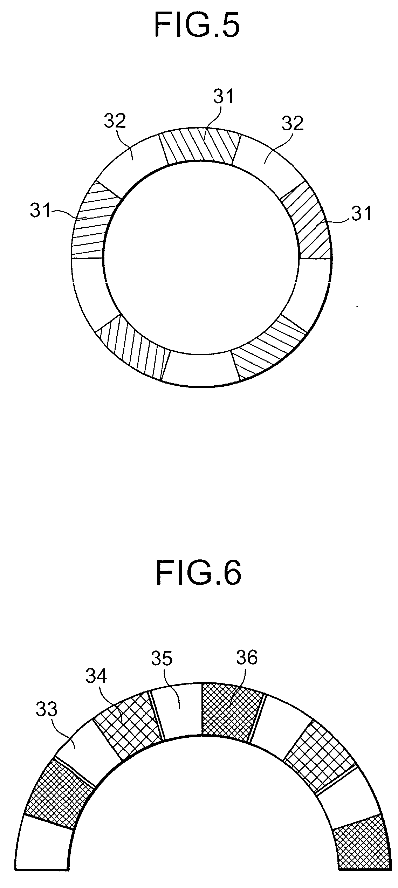

Fig. 5 is a schematic view showing power test areas in the case where three information recording layers exist. In the figure, the reference numeral 31 refers to a power test area in the second information recording layer, and 32 to a power test area in the third information recording layer. Of course, power test areas may be formed similarly in the first information recording layer too. Further, a method of dividing a power test area is not limited to the shown method where an area is divided in the circumferential direction. Any dividing method may be employed as far as dedicated power test areas provided respectively in the information recording layers are located in respective positions that do not overlap each other seen from the laser beam incidence side. An appropriate dividing pattern may be employed, such as a pattern that is divided into areas located in different positions in the radial direction, for example. However, in the case of the optical information record medium 28 whose appearance is shown in Fig. 4, the medium 28 has two information recording layers. Accordingly, one power test area 29 is sufficient in this case, without requiring division as shown in Fig. 5.

Hereinabove, the power test areas 29 are used to obtain the optimum power $P_0$ for the n-th information recording layer when the recording laser beam transmitting part in the first through (n - 1)-th information recording layers is in the state of the lowest transmittance, and to obtain the maximum level $I_{topE}$ (or the minimum level $I_{bottomE}$ or the average level $I_{aveE}$) of the return beam in that case. However, it is possible to obtain the optimum power $P_0$ for the n-th information recording layer when the recording laser beam transmitting part in the first through (n - 1)-th information recording layers is in the state of the highest transmittance (i.e., the part is in an entirely recorded state, namely, amorphous) and to obtain the maximum level $I_{topR}$ (or the minimum level $I_{bottomR}$ or the average level $I_{aveR}$) of the return beam in that case, storing the obtained values into the memory or the like provided to the control unit 5. When user data is to be recorded on the n-th or deeper information recording layer, these data are used together with a recording power $P_B$ that was used at the time of recording on a track B just inside or outside the track A in which the user data in question are to be recorded and the maximum level $I_{topB}$ (or the minimum level $I_{bottomB}$ or the average level $I_{aveB}$) of the return beam detected at that time by the photodetector 4, in order to calculate the optimum power $P_{opt}$ of the recording laser beam according to the following expression and to control the power of the recording laser beam based on the calculation result.

$$P_{opt} = P_0 \times (I'_{topB}/I_{topR})^{0.5}$$

where $I'_{topB}$ is the maximum level of the return beam when it is assumed that the recording power $P_B$ is same as the recording power $P_0$, and can be obtained from the following expression.

$$I'_{topB} = I_{topB} \times (P_B/P_0)^2$$

Further, to improve the accuracy of adjustment of the power of the recording laser beam, both the optimum power $P_0$ for the n-th information recording layer in the case where the recording laser beam transmitting part in the first through (n - 1)-th information recording layers has the lowest transmittance (in an entirely unrecorded state) and the optimum power $P_a$ for the n-th information recording layer in the case where that part has the highest transmittance (in an entirely recorded state) may be obtained. These data may be used to obtain the optimum power $P_{opt}$ of the recording laser beam for a track A in the n-th information recording layer, according to the following expression.

$$P_{opt} = P_0 + ((P_a - P_0) / (I_{topR} - I_{topE})) \times I'_{topB}$$

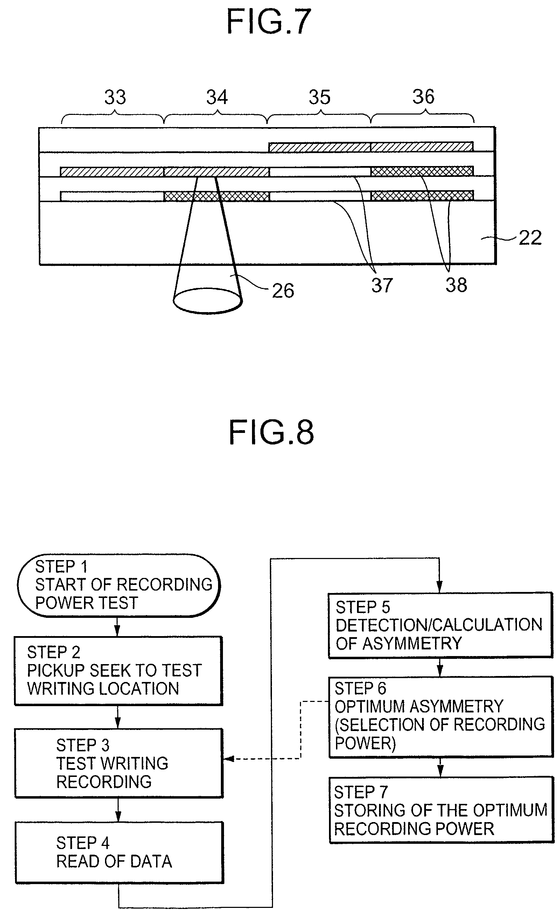

In this case, the power test areas become as shown in Figs. 6 and 7 (in the case of three information recording layers). Here, Fig. 7 is a schematic cross section showing the power test areas of Fig. 6. In Figs. 6 and 7, the reference numeral 33 refers to a $P_0$ test area in the second information recording layer, 34 to a $P_a$ test area in the second information recording layer, 35 to a $P_0$ test area in the third information recording layer, and 36 to a $P_a$ test area in the third information recording layer. Further, the reference numeral 37 refers to crystal parts, and 38 to amorphous parts. In comparison with Fig. 6, like reference numerals are used for like parts, omitting their explanation.

Here, it is favorable that initialization to respective states of the crystal parts 37 and amorphous parts 38 is performed by an initialization apparatus and a drive. Further, the recorded state (of the amorphous parts 38) may be realized at the same time with formatting etc. when a user buys an optical information record medium and mounts it on the drive for the first time. Further, it is assumed that effect of a state (recorded state/unrecorded state) of the n-th information recording layer for which the power test is performed is sufficiently small in comparison with the effect of the state of the (n - 1)-th information recording layer.

Hereinabove, it is assumed that an information recording layer has a lower transmittance (higher reflectance) when it is in an unrecorded state, and has a higher transmittance (lower reflectance) when it is in a recorded state. However, the present invention can be applied similarly to a medium that has a higher transmittance (lower reflectance) in an unrecorded state and has a lower transmittance (higher reflectance) in a recorded state.

Next, will be described operation of the recording power test in the information recording apparatus shown in Fig. 1.

For the sake of simplicity, it is assumed here that the optical information record medium 28 is subjected to rotation control to have a constant linear velocity (CLV). Namely, it is assumed that power of the recording laser beam is same for a same circumference (track).

Fig. 8 is a flowchart for explaining the operation of the recording power test in the information recording apparatus shown in Fig. 1.

First, the control unit 5 starts the recording power test (Step 1), and controls the pickup 2 to seek a power test area 29 in the n-th information recording layer (n≧2) of the optical information record medium 28 (Step 2). Further, as a setting parameter of the value of the recording power of the recording laser beam, the control unit 5 sets the initial value of laser driving current to the laser driver 3. This makes the laser source 1 output the recording laser beam having the recording power of the initial value. The recording laser beam is irradiated on the power test area 29 of the n-th information recording layer, through the pickup 2. Then, the control unit 5 controls the pickup 2 and the laser driver 3 to record the test writing into the power test area 29 of the n-th information recording layer (Step 3).

Here, it is favorable that the set value of the test writing is recorded with five recording points, i.e., the maker recommendation recording power recorded usually in a lead-in area or the like of the optical disk, and recording powers of ± 5 % and ± 10 %. Of course, use of the maker recommendation recording power, and ±5 % and ± 10 % recording powers is an example, and the present invention is not limited to this example. Each time when the laser beam having recording power of a set value of the test writing is irradiated onto a power test area 29, the level of the return beam detected by the photodetector 4 is held temporally in control unit 5.

Then, the control unit 5 controls the pickup 2 to read the data recorded in the power test area 29 for each set value of the test writing (Step 4). Then, for each set value of the test writing, a reproduced signal outputted from the photodetector 4 is used to measure and calculate data (such as asymmetry, for example) usable as a standard of the recording state (Step 5).

Next, the control unit 5 selects an asymmetry value that is close to a prescribed optimum asymmetry value, out of the asymmetry values measured and calculated for each set value of the test writing (Step 6). When there is not an asymmetry value close to the prescribed optimum asymmetry value, then, as shown by the path of the dotted arrow in the figure, the flow returns to Step 3 to set again the recording powers in a wider range than the initially-set range, and Step 4 and the following steps are executed again. Here, as the criterion of judgment for determining the optimum power of the recording laser beam, jitter or pulse width of the reproduced signal may be used other than the above-mentioned asymmetry.

Next, the control unit 5 decides the test writing set value corresponding to the selected asymmetry value as the optimum power $P_0$ of the recording laser beam. And, this optimum power $P_0$ and the maximum level $I_{topE}$ (or the minimum level $I_{bottomE}$ or the average level $I_{aveE}$) of the return beam at that time are stored into the memory or the like (Step 7). This finishes the recording power test.

In the case of the constant angular velocity (CAV) disk rotation control, the linear velocity changes continuously in the radial direction. Thus, it is difficult to test the recording power at the linear velocity corresponding to a recording location (circumference or track). In that case, the recording power may be tested for the innermost track having the smallest linear velocity and for the outermost track having the largest linear velocity. And, then, interpolation is employed to obtain the optimum power for each track. For example, when a symbol $P_{in}$ refers to the optimum power for the innermost track, $P_{out}$ to the optimum power for the outermost track, $LV_{in}$ to the linear velocity at the innermost track, $LV_{out}$ to the linear velocity at the outermost track, and $LV_x$ to a linear velocity at a track x, then, the optimum power $P_x$ for the track x can be calculated by the following expression.

$$P_x = Pin + ((P_{out} - Pin) / (LV_{out} - LVin)) \times LV_x$$

According to the present invention, as described above, when information is to be recorded on a second or deeper information recording layer of an optical information record medium having two or more information recording layers, it is possible to control appropriately the power of the recording laser beam, even if quantity of transmitted beam is changed depending on the recording state of the recording layers positioned on the incidence side of the information recording layer on which the information is to be recorded.

**Claims**

1. An optical information record medium having two or more information recording layers, wherein:

   said optical information record medium has recording power test areas respectively in second and deeper information recording layers from a recording laser beam incidence side, said recording power test areas being different from user data recording areas and used for testing a recording power.

2. The optical information record medium according to Claim 1, wherein:

   said recording power test areas provided respectively in the second and deeper information recording layers are located not to overlap each other seen from the laser beam incidence side.

3. The optical information record medium according to Claim 1, wherein:

   in each information recording layer positioned on the recording laser beam incidence side of an information recording layer provided with said recording power test area, said each information recording layer is provided with a part in a state of a lowest transmittance or a highest transmittance and a recording laser beam for irradiating said recording power test area is transmitted through said part.

4. The optical information record medium according to Claim 3, wherein:

   each of said second and deeper information recording layers is provided with both said recording power test area in the state of the lowest transmittance and said recording power test area in the state of the highest transmittance.

5. An information recording method in which a recording laser beam is used for recording information on an optical information record medium having two or more information recording layers, wherein:

   said optical information record medium has recording power test areas respectively in second and deeper information recording layers from a recording laser beam incidence side, said recording power test areas being different from user data recording areas and used for testing a recording power; and
   said information recording method comprises steps of:

   testing the recording power using a recording power test area in a second or deeper information recording layer before recording on a user data recording area of said information recording layer, to obtain a reference power and a level of a return beam at that time;
   calculating an optimum recording power for an arbitrary location in the user data recording area of said information recording layer before recording on said arbitrary location, with said optimum recording power being calculated using a recording power used for recording on a location in neighborhood of said arbitrary location, a level of a return beam detected at that time, the reference power obtained in said step of testing the recording power, and the level of the return beam obtained at that time; and
   controlling the recording power such that recording on said arbitrary location is performed with said optimum recording power.

6. The information recording method according to Claim 5, wherein:

   the recording power is controlled such that the optimum recording power $P_{opt}$ for said arbitrary location satisfies following expressions:

   $$P_{opt} = P_0 \times (I_E/I'_B)^{0.5}$$

   $$I'B = IB \times (P_B/P_0)^2$$

   in which $P_0$ is the reference power obtained in said step of testing the recording power, $I_E$ is the level of the return beam obtained at that time, $P_B$ is the recording power used for recording on the location in the neighborhood of said arbitrary location, and $I_B$ is the level of the return beam detected at that time.

7. The information recording method according to Claim 5, wherein:

in each information recording layer positioned on a recording laser beam incidence side of the information recording layer provided with said arbitrary location and said location in the neighborhood, a positional deviation between a part through which the recording laser beam irradiated for recording on said arbitrary location is transmitted and a part through which the recording laser beam irradiated for recording on said location in the neighborhood is within a predetermined range.

8. An information recording apparatus using a recording laser beam for recording information on an optical information record medium that has two or more information recording layers and recording power test areas provided respectively in second and deeper information recording layers from a recording laser beam incidence side, with said recording power test areas being different from user data recording areas and used for testing a recording power of the recording laser beam, wherein:

said information recording apparatus comprises:

a laser source;
an irradiation means that irradiates a recording laser beam from said laser source onto the optical information record medium;
a photo detection means for detecting a return beam of said recording laser beam; and
a control unit; and
said control unit:

tests the recording power using a recording power test area in a second or deeper information recording layer before recording on a user data recording area of said information recording layer, to obtain a reference power and a level of a return beam at that time;
calculates an optimum recording power for an arbitrary location in the user data recording area of said information recording layer before recording on said arbitrary location, with said optimum recording power being calculated using a recording power used for recording on a location in neighborhood of said arbitrary location, a level of a return beam detected at that time, the reference power obtained in said step of testing the recording power, and the level of the return beam obtained at that time; and
controls the recording power such that recording on said arbitrary location is performed with said optimum recording power.

9. The information recording apparatus according to Claim 8, wherein:

said control unit controls the recording power such that the optimum recording power $P_{opt}$ for said arbitrary location satisfies following expressions:

$$P_{opt} = P_0 \times (I_E/I'_B)^{0.5}$$

$$I'_B = I_B \times (P_B/P_0)^2$$

in which $P_0$ is the reference power obtained in said step of testing the recording power, $I_E$ is the level of the return beam obtained at that time, $P_B$ is the recording power used for recording on the location in the neighborhood of said arbitrary location, and $I_B$ is the level of the return beam detected at that time.

# FIG.1

# FIG.2

# FIG.3

12

ZERO LEVEL

12e
UNRECORDED PART OF
THE FIRST LAYER

12r
RECORDED PART OF
THE FIRST LAYER

$I_{top\,R}$

$I_{top\,E}$

$I_{bottom\,R}$

$I_{ave\,R}$

$I_{ave\,E}$

$I_{bottom\,E}$

INNER CIRCUMFERENCE
SIDE

OUTER CIRCUMFERENCE
SIDE

EP 1 244 096 A2

# FIG.4

28

30

29

# FIG.5

# FIG.6

# FIG.7

33　　　34　　　35　　　36

26

22

37　　38

# FIG.8

STEP 1
START OF RECORDING
POWER TEST

STEP 2
PICKUP SEEK TO TEST
WRITING LOCATION

STEP 3
TEST WRITING
RECORDING

STEP 4
READ OF DATA

STEP 5
DETECTION/CALCULATION
OF ASYMMETRY

STEP 6
OPTIMUM ASYMMETRY
(SELECTION OF RECORDING
POWER)

STEP 7
STORING OF THE OPTIMUM
RECORDING POWER

# FIG.9

# FIG.10

(A)         (B)         (C)